(19) Europäisches Patentamt
European Patent Office
Office européen des brevets

(11) **EP 3 936 489 A1**

(12) **EUROPEAN PATENT APPLICATION**
published in accordance with Art. 153(4) EPC

(43) Date of publication:
**12.01.2022 Bulletin 2022/02**

(51) Int Cl.:
*C04B 35/486* (2006.01)   *C04B 35/043* (2006.01)
*C04B 35/101* (2006.01)   *C04B 35/185* (2006.01)
*C04B 35/443* (2006.01)   *C04B 35/64* (2006.01)
*F27D 3/12* (2006.01)

(21) Application number: 20766494.7

(22) Date of filing: **06.03.2020**

(86) International application number:
**PCT/JP2020/009752**

(87) International publication number:
**WO 2020/179917 (10.09.2020 Gazette 2020/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.03.2019   JP 2019040270
06.03.2019   JP 2019040275**

(71) Applicant: **Nikkato Corporation**
**Osaka 590-0001 (JP)**

(72) Inventors:
• **HIRASHITA, Kouji**
**Sakai-shi, Osaka 590-0001 (JP)**
• **KUBO, Keisuke**
**Sakai-shi, Osaka 590-0001 (JP)**
• **NAKA, Hironori**
**Sakai-shi, Osaka 590-0001 (JP)**
• **OHNISHI, Hiroshi**
**Sakai-shi, Osaka 590-0001 (JP)**
• **ASANO, Kazuyuki**
**Sakai-shi, Osaka 590-0001 (JP)**

(74) Representative: **Script IP Limited**
**Turnpike House**
**18 Bridge Street**
**Frome Somerset BA11 1BB (GB)**

(54) **CERAMIC SINTERED COMPACT HAVING EMBOSSED SURFACE, METHOD FOR MANUFACTURING SAME, AND HEAT TREATMENT MEMBER COMPRISING SAID CERAMIC SINTERED COMPACT**

(57)    The present invention relates to a ceramic sintered compact having the embossed surface, a method for manufacturing the same, and a heat treatment member consisting of the ceramic sintered compact. A ceramic sintered compact having embossment satisfying the requirements (a) to (d) on the surface: (a) a maximum height of protruding parts of the embossment: Ry is 30 $\mu$m or less, (b) a width of protruding parts of the embossment is 120 $\mu$m or less, (c) a difference between a maximum height and a minimum height of protruding parts of the embossment is 15 $\mu$m or less, and (d) the number of protruding parts of the embossment is 30 to 200 in an area of 1 mm$^2$ of the surface.

[Fig. 2]

Maximum height of protruding parts

Minimum height of protruding parts

Profile curve

EP 3 936 489 A1

# Description

## Technical Field

The present invention relates to a ceramic sintered compact having the embossed surface, a method for manufacturing the same, and a heat treatment member consisting of the ceramic sintered compact.

## Background Art

Electronic devices such as smartphones to begin with have rapidly progressed in downsizing and higher performance due to notable technological development. Further, in recent years, a wide variety of safety apparatuses to support safe automobile driving have been developed and loaded in many automobiles. For this reason, manufacturing conditions of electronic components have been increasingly restricted due to the downsizing and higher performance, and a calcination step in particular has been a critically important key.

That is, starting materials for electronic components have been conventionally manufactured by calcining a blockshaped sintered compact and cutting them out from such a block, however, electronic components such as piezoelectric substances to begin with used have also progressed in downsizing and higher performance in recent years, and multilayered component structures have been employed for the purpose of not only controlling a precise composition but also achieving higher performance in a smaller size. For this reason, cases of manufacturing electronic components immediately after calcination without processing have been quite increasing. Further, compositions have been more complicated than the conventional electronic components, and some ingredients evaporate when calcined causing a composition to be not exactly as intended and hence likely posing problems of failing to achieve properties as targeted and the like. Under the circumstances, countermeasures have been taken to minimize composition variations in calcined electronic components such as increasing a calcination rate, employing a heat treatment member with extremely low reactivity to an electronic component to be calcined and the like.

Known heat treatment members consisting of ceramic sintered compacts with good corrosion resistance and durability are those consisting of an alumina-based sintered compact (Patent Document 1), a magnesia-based sintered compact (Patent Document 2), a mullite-based sintered compact (Patent Document 3), a spinel-based sintered compact (Patent Document 4), and a zirconia-based sintered compact (Patent Document 5). However, the conventional countermeasures taken using these heat treatment members still fail to obtain practically satisfying electronic components.

Meanwhile, Patent Documents 6 and 7 disclose an invention in which, instead of improving the material for a heat treatment member, embossment or island-like swelling parts are provided on the member surface to prevent the reaction by reducing a contact with an electronic component to be calcined. Patent Document 6 specifies the height of protruding parts, the pitch between protruding parts, the shape of protruding parts, and the thickness of recessed parts, and Patent Document 7 specifies the average height, diameter, and the number in a specific area of island-like swelling parts. However, electronic components cannot be calcined without deformations even when these specifications are satisfied. That is, in the case where a difference between the maximum height and the minimum height of protruding parts of embossment is significant, even with an average height value of protruding parts being in a specific range, when electronic components are placed on a heat treatment member applied for the calcination of a recent downsized electronic component, variations in the space between each protruding part and the electronic component increase and cause a state in which parts of the electronic component placed properly on protruding parts and parts with gaps between the electronic component and protruding parts are mixed, thereby resulting in deformations and the like when calcined.

Electronic components required to be downsized and higher performed need to have stable properties free from deformations and cracks when calcined. However, a composition of an electronic component caused to change at the contact surface and non-contact surface with a heat treatment member when calcining the electronic component fails to obtain stable properties.

Further, synthesis of a high function powder such as electrolyte for all-solid-state secondary battery is carried out by putting various mixed raw material powders in a container but, after the synthesis, the synthesized powder may have a varied composition due to the reaction and attachment of the synthesized powder to the container, and further when the container is repeatedly used for the synthesis, the synthesized powder which has been in contact with the reaction part of the container may have a different crystal structure from the synthesized powder otherwise.

## Prior Art Documents

## Patent Documents

**EP 3 936 489 A1**

Patent Document 1: Japanese unexamined Patent Application Publication No. 2001-114555
Patent Document 2: Japanese unexamined Patent Application Publication No. 1-188459
Patent Document 3: Japanese unexamined Patent Application Publication No. 62-3069
Patent Document 4: Japanese unexamined Patent Application Publication No. 2000-302538
Patent Document 5: Japanese unexamined Patent Application Publication No. 2004-315293
Patent Document 6: Japanese unexamined Patent Application Publication No. 2013-178053
Patent Document 7: Japanese unexamined Patent Application Publication No. 2003-300782

## Summary of the Invention

### Object to be Solved by the Invention

The present invention has an object to provide a high functional ceramic sintered compact capable of preventing deformations and cracks of calcined electronic components when used as a heat treatment setter for manufacturing downsized and higher performed electronic components and the like by calcination and, when used as a container for synthesizing a high function powder, also capable of preventing the reaction and attachment of the container to the synthesized powder, a method for manufacturing the same, and a heat treatment member.

### Means to Solve the Object

The above object is solved by the following inventions (1) to (10). That is, the present invention is defined by the following matters.

(1) A ceramic sintered compact having embossment satisfying the following requirements (a) to (d) on the surface:

   (a) a maximum height of protruding parts of the embossment: Ry is 30 $\mu$m or less;
   (b) a width of protruding parts of the embossment is 120 $\mu$m or less;
   (c) a difference between a maximum height and a minimum height of protruding parts of the embossment is 15 $\mu$m or less; and
   (d) the number of protruding parts of the embossment is 30 to 200 in an area of 1 mm$^2$ of the surface.

(2) The ceramic sintered compact according to the above (1), being an alumina-based sintered compact, a magnesia-based sintered compact, a mullite-based sintered compact, a spinel-based sintered compact, or a zirconia-based sintered compact.
(3) The ceramic sintered compact according to the above (1) or (2), wherein a porosity is 0.5% or less.
(4) The ceramic sintered compact according to the above (3), being an alumina-based sintered compact having an $Al_2O_3$ content of 95.0 wt% or more and an average crystal grain size of 5 to 30 $\mu$m.
(5) The ceramic sintered compact according to the above (3), being a magnesia-based sintered compact having a MgO content of 99.0 wt% or more and an average crystal grain size of 20 to 40 $\mu$m.
(6) The ceramic sintered compact according to the above (3), being a mullite-based sintered compact having a total content of $Al_2O_3$ and $SiO_2$ of 98.0 wt% or more, an $Al_2O_3/SiO_2$ weight ratio of 70/30 to 76/24, an average crystal grain size of 2 to 15 $\mu$m, and a mullite crystal phase amount of 96 vol% or more.
(7) The ceramic sintered compact according to the above (3), being a spinel-based sintered compact having a total content of $Al_2O_3$ and MgO of 99.0 wt% or more, an $Al_2O_3/MgO$ weight ratio of 70/30 to 80/20, an average crystal grain size of 3 to 30 $\mu$m, and a spinel crystal phase amount of 94 vol% or more.
(8) The ceramic sintered compact according to the above (3), being a zirconia-based sintered compact containing at least one substance selected from $Y_2O_3$ and CaO as a stabilizer in a range from 8 to 20 mol% based on $ZrO_2$ and having a total content of $ZrO_2$ and the stabilizer of 99.0 wt% or more, an average crystal grain size of 5 to 40 $\mu$m, and 98 vol% or more of the crystal phase being cubic zirconia.
(9) A method for manufacturing the ceramic sintered compact according to any one of the above (1) to (8), comprising:

   a step of blending ceramic raw materials,
   a step of performing wet mixing, milling, and dispersing so that an average particle size of a slurry is 1.0 $\mu$m or less,
   a step of drying the slurry to obtain a powder for molding and obtaining a molded compact having embossment on the surface using the powder for molding, and
   a step of sintering the molded compact at a temperature ranging from 1500 to 1700°C to obtain a sintered compact.

(10) A heat treatment member consisting of the ceramic sintered compact according to any one of the above (1) to (8) .

The present invention comprises the inventions defined by the following matters.

(1) A heat treatment member having embossment satisfying the following requirements (a) to (d) on the surface and consisting of either an alumina-based sintered compact, a magnesia-based sintered compact, a mullite-based sintered compact, or a spinel-based sintered compact:

(a) a maximum height of protruding parts of the embossment: Ry is 30 $\mu$m or less;
(b) a width of protruding parts of the embossment is 120 $\mu$m or less;
(c) a difference between a maximum height and a minimum height of protruding parts of the embossment is 15 $\mu$m or less; and
(d) the number of protruding parts of the embossment is 30 to 200 in an area of 1 mm$^2$ of the surface.

Further, the present invention comprises the inventions defined by the following matters.

(1) A heat treatment member consisting of a zirconia-based sintered compact satisfying the following requirements (a) to (g):

(a) the member consists of a zirconia-based sintered compact containing $Y_2O_3$ as a stabilizer and having 99 vol% or more of the crystal phase being cubic zirconia;
(b) a porosity is 0.3% or less;
(c) an average crystal grain size is 5 to 10 $\mu$m;
(d) a minimum crystal grain size is 3 $\mu$m or more and a maximum crystal grain size is 15 $\mu$m or less;
(e) an $Al_2O_3$ content is 0.05 wt% or less;
(f) [$SiO_2$ (wt%) /$Y_2O_3$ (wt%) ] $\times$ 100 is 0.20 or less; and
(g) an amount of impurities other than $Al_2O_3$ and $SiO_2$ is 0.02 wt% or less.

(2) Further, the heat treatment member according to the above (1) having embossment on the heat treatment member surface and satisfying the following requirements (h) to (k) :

(h) a maximum height of protruding parts of the embossment: Ry is 30 $\mu$m or less;
(i) a width of protruding parts of the embossment is 120 $\mu$m or less;
(j) a difference between a maximum height and a minimum height of protruding parts of the embossment is 15 $\mu$m or less; and
(k) the number of protruding parts of the embossment is 30 to 200 in an area of 1 mm$^2$ of the surface.

**Effect of the Invention**

The present invention can accordingly provide a ceramic sintered compact and a heat treatment member capable of preventing deformations and cracks of calcined electronic components when manufacturing downsized and higher performed electronic components and the like by calcination and, when used as a container for synthesizing a high function powder, also capable of preventing the reaction and attachment of the container to the synthesized powder. Further, these are applicable to a wide variety of usages in which the properties of the present invention are effectively function.

**Brief Description of Drawings**

[Figure 1] An explanatory drawing regarding the width measured values of protruding parts of the ceramic sintered compact surface of the present invention.
[Figure 2] An explanatory drawing regarding the height measured values of protruding parts of the ceramic sintered compact surface of the present invention.

**Mode of Carrying Out the Invention**

Hereinafter, each of the claim components and the like of the present invention described above will be described. Regarding the aspect of (a) a maximum height of protruding parts of the embossment: Ry is 30 μm or less

The above maximum height: Ry is 30 μm or less, and preferably 28 μm or less.

This maximum height does not substantially impact the properties of electronic components to be calcined but when it is more than 30 μm, damages such as deformations by calcination and chips at protruding parts by handling occur thereby likely causing chips, cracking, deformations, and the like of calcined electronic components, hence not preferable. Further, damaged parts and a synthesized powder are caused to react or attach, hence not preferable. Further, broken pieces are mixed in a synthesized powder and sometimes cause a composition variation. Note that the actual manufacturing lower limit is about 10 μm. The measurement of the above maximum height: Ry is carried out in conformity with JIS B 0601 (1994).

Regarding the aspect of (b) a width of protruding parts of the embossment is 120 μm or less

The width of protruding parts of the embossment is 120 μm or less, and preferably 100 μm or less. When a width of protruding parts is more than 120 μm, the area of the top of a single protruding part becomes larger and accordingly the contact area with an electronic component to be calcined and a synthesized powder becomes larger whereby an electronic component and a synthesized powder, depending on the composition, react or attach to the ceramic sintered compact, hence not preferable. Further, when an electronic component attaches to the ceramic sintered compact, cracks and deformations of the electronic component are likely to occur, hence not preferable. Note that the actual manufacturing lower limit is about 45 μm.

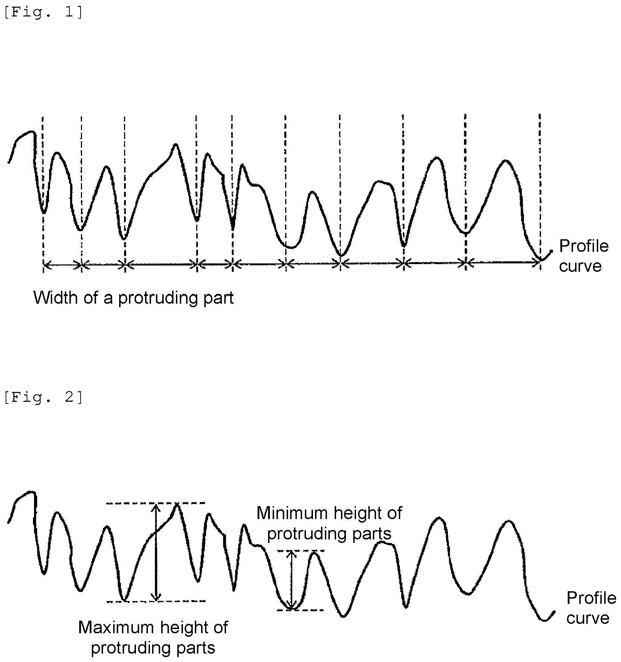

The width of protruding parts is defined as a value obtained by measuring the distance between two valley bottoms interposing a single mountain based on a profile shape curve when the ceramic sintered compact surface is measured by non-contact measurement such as the stylus method or a laser microscope (see Figure 1). Note that the average value obtained by measuring 30 points in a range of measurement length of 1000 μm is employed. The measurement when explained in reference to Figure 1, which is a schematic drawing to explain the relation between a profile shape in a range of 1000 μm length at any one point and the width of protruding parts, is carried out by measuring the widths of all protruding parts shown in Figure 1 and carrying out the same measurement at 30 points to obtain an average value, which is employed as the width of protruding parts in the present invention.

Regarding the aspect of (c) a difference between a maximum height and a minimum height of protruding parts of the embossment is 15 μm or less

The difference between the maximum height and the minimum height of protruding parts of the embossment is 15 μm or less, and preferably 13 μm or less. When a difference is more than 15 μm, some parts of an electronic component to be calcined are not supported by protruding parts consequently reducing protruding parts which support the electronic component, thereby likely causing deformations and cracks when calcined, hence not preferable. Further, when the member is used as a container for a synthesized powder, attachment is caused, hence not preferable. Note that the actual manufacturing lower limit is about 5 μm.

The height of protruding parts of the embossment is defined as a value obtained by measuring the distance between adjacent mountain tops and a valley bottom based on a profile shape curve when the ceramic sintered compact surface is measured by stylus method or non-contact measurement such as the laser microscope (see Figure 2). Note that the average value obtained by measuring 30 points of protruding parts present in a length of 1000 μm is employed. The measurement when explained in reference to Figure 2, which is a schematic drawing to explain the relation between a profile shape in a range of 1000 μm length at any one point and the maximum height and the minimum height of protruding parts, is carried out by measuring the heights of all protruding parts shown in Figure 2 to determine the differences between the maximum heights and the minimum heights. The same operation is carried out at 30 points to obtain an average value in the differences between the maximum heights and the minimum heights at such 30 points which is employed as the difference between the maximum height and the minimum height of protruding parts in the present invention.

Regarding the aspect of (d) the number of protruding parts of the embossment is 30 to 200 in an area of 1 mm² of the surface

The number of protruding parts of the embossment is 30 to 200, and preferably 40 to 150. When the number is less than 30, an electronic component to be calcined is not in the state of being sufficiently placed on protruding parts and calcined while in the state of being tilted because a part thereof is not placed or while in the state of being placed between adjacent protruding parts in a "bridge"-like manner, whereby problems such as deformations are likely to occur, hence not preferable. On the other hand, when the number is more than 200, the contact area between an electronic component on the member and the protruding parts of the member becomes larger thereby causing the attachment and reaction, or the space under an electronic component becomes smaller thereby causing an atmospheric difference between the surface placed on protruding parts and the surface opposite thereto whereby consequently the calcined electronic component may have nonuniform properties and deformations, hence not preferable. Further, the contact area between a synthesized powder and protruding parts becomes larger thereby causing the attachment and reaction, hence not preferable.

The number of protruding parts of the embossment is defined as the value counted from a 3D image of the surface when the ceramic sintered compact surface is measured by a non-contact laser microscope or the like. Note that the average value, which is obtained when the number in a measurement area of 1000 $\mu$m $\times$ 1000 $\mu$m is counted and the counted number is subjected to 10-point measurement, is employed.

In the present invention, the surface of an alumina-based sintered compact, a magnesia-based sintered compact, a mullite-based sintered compact, a spinel-based sintered compact or a zirconia-based sintered compact (hereinafter, collectively referred to as the ceramic sintered compact) is embossed and used as a heat treatment member, thereby enabling the prevention of deformations and cracks of electric components and the like when calcined. Further, when the inner surface of the container-shaped heat treatment member is embossed and such a container is used as a container for synthesis, there is also an effect to prevent the reaction and attachment of a synthesized powder to the inner surface of the container.

The alumina-based sintered compact according to the present invention has an $Al_2O_3$ content of preferably 95.0 wt% or more, and more preferably 96.0 wt% or more. An $Al_2O_3$ content of less than 95.0 wt% results in a large amount of impurities such as $SiO_2$, $CaO$, $Na_2O$, $K_2O$, and $Fe_2O_3$ likely causing reduced corrosion resistance. Further, the alumina-based sintered compact optionally contains 0.1 to 5.0 wt% in total of at least one substance selected from $ZrO_2$ and $MgO$ as a sintering aid. Note that 1 to 3 mol% of $Y_2O_3$ as a stabilizer is optionally solid-soluted in $ZrO_2$. The average crystal grain size is preferably 5 to 30 $\mu$m, and more preferably 5 to 25 $\mu$m. The crystal phase is preferably $\alpha$-$Al_2O_3$ single phase.

The magnesia-based sintered compact according to the present invention has a $MgO$ content of preferably 99.0 wt% or more, and more preferably 99.2 wt% or more. A $MgO$ content of less than 99.0 wt% results in a large amount of impurities such as $SiO_2$, $CaO$, $Na_2O$, $K_2O$, $Fe_2O_3$, and $Al_2O_3$ likely causing reduced corrosion resistance. Further, the average crystal grain size is preferably 20 to 40 $\mu$m, and more preferably 25 to 35 $\mu$m. The crystal phase is preferably $MgO$ single phase.

The mullite-based sintered compact according to the present invention has the total content of $Al_2O_3$ and $SiO_2$ of preferably 98.0 wt% or more, and more preferably 99.0 wt% or more. A total content of less than 98.0 wt% results in a large amount of impurities such as $CaO$, $Na_2O$, $K_2O$, $MgO$, and $Fe_2O_3$ likely causing reduced corrosion resistance. The weight ratio of $Al_2O_3/SiO_2$ is preferably 70/30 to 76/24, and more preferably 70/30 to 75/25. A weight ratio of $Al_2O_3/SiO_2$ outside this range is likely to reduce durability. Further, the average crystal grain size is preferably 2 to 15 $\mu$m, and more preferably 2 to 13 $\mu$m.

The mullite-based sintered compact of the present invention has a mullite crystal phase amount of preferably 96 vol% or more, and more preferably 98 vol% or more, and the balance is preferably $\alpha$-$Al_2O_3$ crystals. The mullite crystal in the present invention includes not only mullite crystals represented by a chemical formula $3Al_2O_3 \cdot 2SiO_2$ ($Al_2O_3$: 71.8 wt%, $SiO_2$: 28.2 wt%) but also a mullite solid solution. In the present invention, when a mullite crystal phase amount is less than 96 vol%, thermal shock resistance and durability are likely to reduce due to increased distortions and increased residual expansion caused by the difference in thermal expansion between $\alpha$-$Al_2O_3$ crystals and mullite crystals. Thus, the crystal phase desirably consists only of mullite crystals but the crystal phase containing 4 vol% or less of $Al_2O_3$ crystals can be preferably used. Further, when $SiO_2$ crystal phase is present in the mullite-based sintered compact, distortions increase during the heat cycle by the difference in coefficient of thermal expansion between $SiO_2$ crystals and mullite crystals thereby notably reducing durability, and it is thus preferable that the $SiO_2$ crystal phase be not substantially present in the present invention.

In the present invention, the contents of mullite crystal phase and $\alpha$-$Al_2O_3$ crystal phase are determined by the following method using X-ray diffraction. Specifically, the sintered compact is milled in a mortar to the extent that the grains do not feel at the fingertip, and the obtained powder sample is measured by X-ray diffraction in a scanning range from a diffraction angle of 10 to 70° to determine the contents of mullite crystal phase and $\alpha$-$Al_2O_3$ crystal phase by the following formula (see Equation 1). Note that the X-ray diffraction conditions are X-ray source: $CuK\alpha$, output: 40 kV/40 mA, divergence slit: 0.5°, receiving slit: OPEN, step: 0.02°, step time: 0.4 sec, and scan axis: $2\theta/\theta$.

[Equation 1]

Mullite crystal phase amount (vol%)
$= \{IM(210) / [IM(210) + IA(113)]\} \times 100$
Al$_2$O$_3$ crystal phase amount (vol%)
$= \{IA(113) / [IM(210) + IA(113)]\} \times 100$

(wherein, IM(210) is the peak height of mullite crystal diffraction peak (210), and IA(113) is the peak height of $\alpha$-Al$_2$O$_3$ crystal diffraction peak (113))

The spinel-based sintered compact according to the present invention has the total content of Al$_2$O$_3$ and MgO of preferably 99.0 wt% or more, and more preferably 99.4 wt% or more. A total content of less than 99.0 wt% results in a large amount of impurities such as SiO$_2$, CaO, Na$_2$O, K$_2$O, and Fe$_2$O$_3$ likely reducing corrosion resistance. The weight ratio of Al$_2$O$_3$/MgO is preferably 70/30 to 80/20, and more preferably 70/30 to 77/23. An Al$_2$O$_3$/MgO weight ratio outside this range is likely to reduce durability. Further, the average crystal grain size is preferably 3 to 30 $\mu$m, and more preferably 3 to 25 $\mu$m.

The spinel-based sintered compact according to the present invention is primarily composed of spinel crystals. This spinel crystal is not an aggregate of individual Al$_2$O$_3$ and MgO crystals but a crystalline substance consisting of the compound of Al$_2$O$_3$ and MgO. When the spinel-based sintered compact contains a large amount of Al$_2$O$_3$ crystal phase, corrosion resistance to alkali such as PbO reduces. Further, when the spinel-based sintered compact contains a large amount of MgO crystal phase, thermal shock resistance and durability reduce. It is preferable that the crystal phase amounts of Al$_2$O$_3$ and MgO be up to 3 vol%, respectively. The spinel crystal phase amount in the present invention is preferably 94 vol% or more, and more preferably 96 vol% or more. The present invention encompasses cases of containing small amounts of these crystal phases other than spinel crystals, and thus they are collectively called the spinel-based sintered compact.

In the present invention, the presence or absence of a content and contents of Al$_2$O$_3$ crystal phase and MgO crystal phase are determined by the following method using X-ray diffraction. Specifically, the sintered compact is milled in a mortar to the extent that the grains do not feel at the fingertip, and the obtained powder sample is measured by X-ray diffraction in a scanning range from a diffraction angle of 10 to 70° to determine the presence or absence of a content and contents of Al$_2$O$_3$ crystal phase and MgO crystal phase by the following formulae (see Equation 2 and Equation 3). The spinel crystal phase amount is determined by Equation 4. Note that the X-ray diffraction conditions are X-ray source: CuK$\alpha$, output: 40 kV/40 mA, divergence slit: 0.5°, receiving slit: OPEN, step: 0.01°, step time: 0.2 sec, and scan axis: 2$\theta$/$\theta$.

[Equation 2]

Al$_2$O$_3$ crystal phase amount (vol%)
$= \{IA(113) / [IS(311) + IA(113) + IM(200)]\} \times 100$

(wherein, IA(113) is the peak height of $\alpha$-Al$_2$O$_3$ crystal diffraction peak (113), IS(311) is the peak height of spinel crystal diffraction peak (311), and IM(200) is the peak height of MgO crystal diffraction peak (200).)

[Equation 3]

MgO crystal phase amount (vol%)
$= \{IM(200) / [IS(311) + IA(113) + IM(200)]\} \times 100$

(wherein, IM(200) is the peak height of MgO crystal diffraction peak (200), IA(113) is the peak height of $\alpha$-Al$_2$O$_3$ crystal diffraction peak (113), and IS(311) is the peak height of spinel crystal diffraction peak (311).)

[Equation 4]

Spinel crystal phase amount (vol%) $=$ 100 - Al$_2$O$_3$ crystal phase amount - MgO crystal phase amount

The zirconia-based sintered compact according to the present invention preferably contains at least one sub-

stance selected from $Y_2O_3$ and CaO as a stabilizer in a range from 8 to 20 mol% based on $ZrO_2$. It is more preferably 8 to 15 mol%. A content outside this range is likely to reduce durability. The total content of $ZrO_2$ and the stabilizer is preferably 99.0 wt% or more, and more preferably 99.4 wt% or more. A content of less than 99.0 wt% results in a large amount of impurities such as $SiO_2$, $Na_2O$, $K_2O$, MgO, and $Fe_2O_3$, likely reducing corrosion resistance. Further, the average crystal grain size is preferably 5 to 40 $\mu$m, and more preferably 5 to 35 $\mu$m.

The crystal phase of the zirconia-based sintered compact according to the present invention has preferably 98 vol% or more, and more preferably 99 vol% or more, of cubic zirconia. When monoclinic zirconia and tetragonal zirconia are mixed in the sintered compact, microcracks are caused by the volume expansion associated with the phase transition of zirconia crystal phase due to heating and cooling when the compact is used as a heat treatment member, cracks occur by the penetration of ingredients of a substance to be calcined such as an electronic component to be calcined and a synthesized powder and the growth of the microcracks, thereby likely inducing reduced corrosion resistance and durability, and further thermal shock resistance. Note that the crystal phase desirably consists only of cubic zirconia but the crystal phase containing 1 vol% or less of tetragonal zirconia and monoclinic zirconia can be preferably used.

The contents of cubic, tetragonal, and monoclinic zirconia in the present invention are determined by the X-ray diffraction measurement using a sample of a sintered compact whose surface is mirror finished by the following formula (see Equation 5). Note that the X-ray diffraction conditions are X-ray source: CuK$\alpha$, output: 40 kV/40 mA, divergence slit: 1/2° (diffraction angle 27 to 33°), 1° (diffraction angle 72 to 75.5°), scattering slit: 1/2° (diffraction angle 27 to 33°), 1° (diffraction angle 72 to 75.5°), receiving slit: 0.15 mm, scan speed: 0.5°/min, scan axis: 2θ/θ, monochrome receiving slit: 0.8 mm, counter: scintillation counter, and monochromator: automatic monochromator.

[Equation 5]

Cubic zirconia (C) content (vol%) =
$$\{I_{T+C}(111) / [I_M(111) + I_M(1\overline{1}\overline{1}) + I_{T+C}(111)]\} \times \{I_C(400) / [ I_C(400) + I_T(400) + I_T(004) ]\} \times 100$$

Monoclinic zirconia (M) content (vol%) =
$$\{ [I_M(111) + I_M(1\overline{1}\overline{1})] / [I_M(111) + I_M(11\overline{1}) + I_{T+C}(111)]\} \times 100$$

Tetragonal zirconia (T) content (vol%) =
100 – cubic zirconia (C) content (vol%) – monoclinic zirconia (M) content (vol%)

[wherein,

$I_M(111)$ is the peak height of monoclinic zirconia diffraction peak (111),

$I_M(111)$ is the peak height of monoclinic zirconia diffraction peak (11$\overline{1}$),

$I_{T+C}(111)$ is the tetragonal and cubic zirconia diffraction peak height

$I_C(400)$ is the peak height of cubic zirconia diffraction peak (400), and

$I_T(400)$ and (004) are the peak heights of tetragonal zirconia diffraction peak (400) and (004), respectively.

The porosity of the ceramic sintered compact of the present invention is preferably 0.5% or less. It is more preferably 0.3% or less. It is further preferably 0.2% or less. With a porosity of more than 0.5%, the effects of embossment is less likely to be obtained, whereby ingredients of a substance to be calcined preferentially corrode the pores present in the sintered compact or reduced thermal shock resistance and durability are induced with the pores as the starting point of destruction, hence not preferable. The porosity herein means an open porosity, and the measurement is carried out in conformity with JIS R1634. Note that the actual lower limit is about 0.01%.

In the ceramic sintered compacts of the present invention, when an average crystal grain size is lower than the above lower limit value, the total area of grain boundaries becomes larger likely causing the penetration of ingredients of a substance to be calcined at the grain boundaries and reducing corrosion resistance and durability. On the other hand, an average crystal grain size of more than the above upper limit value does not have a very large impact on corrosion resistance but causes reduced strength and, as a result, is likely to reduce thermal shock resistance and durability.

For the measurement of crystal grain size, the sintered compact surface is first mirror finished using a diamond grinding wheel and abrasive grains, the obtained mirror surface is subjected to thermal etching, observed using a scanning electron microscope at the magnification that 100 or more crystal grains can be observed in the field of view and photographed. Then, the obtained photograph is image analyzed to determine an area of each individual crystal grain, and a value converted to an equivalent circle diameter from the area is calculated as an individual crystal grain size. The diameter at cumulative 50%, when expressing the equivalent circle diameter in terms of cumulative distribution, of 300 crystal grains whose crystal grain sizes are calculated in this way is defined as the average crystal grain size.

Further, in the case of employing $Y_2O_3$ as a stabilizer in the zirconia-based sintered compact according to the present invention, the compact can be a better material in corrosion resistance, durability, and thermal shock resistance when the following requirements (i) to (iv) are further satisfied.

(i) The minimum crystal grain size is 3 $\mu$m or more, and the maximum crystal grain size is 15 $\mu$m or less
(ii) An $Al_2O_3$ content is 0.05 wt% or less
(iii) [$SiO_2$ (wt%) /$Y_2O_3$ (wt%) ] $\times$ 100 is 0.20 or less
(iv) An amount of impurities other than $Al_2O_3$ and $SiO_2$ is 0.02 wt% or less

(i) The minimum crystal grain size is 3 $\mu$m or more, and the maximum crystal grain size is 15 $\mu$m or less.

The zirconia-based sintered compacts having $Y_2O_3$ as a stabilizer of the present invention have different corrosion resistance and durability when the crystal grain size distributions are different even when the average crystal grain sizes are the same. When at least one of the minimum crystal grain size and the maximum crystal grain size of the zirconia-based sintered compact is outside the specified range, the crystal grain size distribution is wide thereby reducing corrosion resistance, durability, and thermal shock resistance. It is preferable that the minimum crystal grain size be 4 $\mu$m or more, and the maximum crystal grain size be 12 $\mu$m or less.

For the minimum crystal grain size and the maximum crystal grain size in the present invention, using the measurement results of the above average crystal grain size, the value at cumulative 10% of the equivalent circle diameter is defined as the minimum crystal grain size and the value at cumulative 90% is defined as the maximum crystal grain size.

(ii) An $Al_2O_3$ content is 0.05 wt% or less.

The zirconia-based sintered compact having $Y_2O_3$ as a stabilizer of the present invention has an $Al_2O_3$ content of 0.05 wt% or less, and preferably 0.03 wt% or less, in the zirconia-based sintered compact. $Al_2O_3$ is present in the zirconia crystal grain boundaries and reacts to a substance to be calcined, thereby causing reduced corrosion resistance. Note that the actual manufacturing lower limit is about 0.01 wt%.

(iii) [$SiO_2$ (wt%)/$Y_2O_3$ (wt%)] $\times$ 100 is 0.20 or less.

The zirconia-based sintered compact having $Y_2O_3$ as a stabilizer of the present invention has [$SiO_2$ (wt%)/$Y_2O_3$ (wt%)] $\times$ 100 of 0.20 or less, and preferably 0.15 or less. The obtention of a zirconia-based sintered compact having good corrosion resistance requires a low $SiO_2$ content, but further a content ratio of $SiO_2$ to $Y_2O_3$ is also important. That is, $SiO_2$ and a part of $Y_2O_3$ segregate at zirconia crystal grain boundaries and an acceptable $SiO_2$ content significantly varies depending on a stabilizer $Y_2O_3$ content, and for this reason the requirement represented by the above formula needs to be satisfied from a viewpoint of maintaining the corrosion resistance. When the value described above is more than 0.20, the zirconia-based sintered compact reacts to a substance to be calcined thereby reducing the corrosion resistance and durability. Note that the actual manufacturing lower limit is about 0.03.

(iv) An amount of impurities other than $Al_2O_3$ and $SiO_2$ is 0.02 wt% or less.

The zirconia-based sintered compact having $Y_2O_3$ as a stabilizer of the present invention has an amount of impurities other than $Al_2O_3$ and $SiO_2$ of 0.02 wt% or less, and preferably 0.01 wt% or less. The impurities other than $Al_2O_3$ and $SiO_2$ are $Na_2O$, $K_2O$, $MgO$, $CaO$, $Fe_2O_3$ and the like. The impurities in an amount of more than 0.02 wt% form a glass phase and secondary phase together with $SiO_2$ and the like at zirconia crystal grain boundaries and react to a substance to be calcined thereby reducing the corrosion resistance and durability. Note that the actual manufacturing lower limit is about 0.005 wt%.

A cordierite sintered compact and a silicon nitride sintered compact other than the above ceramic sintered compacts can also be the ceramic sintered compacts which provide the same effect when subjected to the embossment according to the present invention.

The ceramic sintered compacts of the present invention can be used as heat treatment members such as a heat treatment setter, a container for powder synthesis, a container for growing a single crystal, a heat treatment container, a furnace core tube for a tubular furnace, and a tube for rotary kiln.

The ceramic sintered compacts having the embossed surface of the present invention can be produced by various methods, and an example thereof will be described.

Ceramic raw materials are first blended in such a way as to be a predetermined composition and the raw materials are treated by wet mixing, milling, and dispersing in water or an organic solvent using a known raw material treating machine such as a pot mill and an attrition mill. This raw material treatment is carried out by suitably adjusting the ball diameter, rotation speed, treating time and the like so that an average particle size of the treated slurry is 1.0 $\mu$m or less. When an average particle size of the slurry is more than 1.0 $\mu$m, the moldability and sinterability are reduced thereby reducing the corrosion resistance and durability of the ceramic sintered compacts, hence not preferable. The lower limit of average particle size is about 0.2 $\mu$m. Examples of a method according to each of the materials can be given below.

For alumina-based material and magnesia-based material, raw material powders for each ceramic are blended in such a way as to be a predetermined composition, and the raw materials are treated by wet mixing, milling, and dispersing in water or an organic solvent using a known raw material treating machine such as a pot mill and an attrition mill. Note that when $ZrO_2$ and/or MgO is added as a sintering aid for alumina-based material, the raw material powders thereof can be used in the form of not only an oxide but also compounds such as a hydroxide and a carbonate. The raw material treatment is carried out by suitably adjusting the ball diameter, rotation speed, treating time and the like so that an average particle size of the treated slurry is 1.0 $\mu$m or less. When an average particle size of the slurry is more than 1.0 $\mu$m, the moldability and sinterability are reduced thereby reducing the corrosion resistance and durability of the ceramic sintered compacts, hence not preferable. The lower limit of average particle size is about 0.2 $\mu$m. Further, for the prevention of impurities from mixing in in the form of an abrasion powder from the mill member and the ball during the raw material treatment process, the material with good abrasion resistance according to each ceramic sintered compact is suitably selected and used as the mill member and the ball.

For mullite-based material, a mullite powder produced from liquid raw materials by a coprecipitation method, a sol-gel method or the like is obtained, or a synthesized powder is obtained by homogeneously mixing an aluminum compound and a silica compound and synthesizing at 1000 to 1400°C.

For spinel-based material, an aluminum compound (for example, alumina and aluminium hydroxide) and a magnesium compound (for example, magnesia and magnesium carbonate) are wet mixed homogeneously in such a way that contents of $Al_2O_3$ and MgO are in a predetermined weight ratio, dried, and then synthesized at 1000 to 1500°C to obtain a synthesized powder.

For zirconia-based material, in the case of employing $Y_2O_3$ as a stabilizer, an aqueous solution of a zirconium compound and an aqueous solution of yttrium compound are mixed homogenously in such a way that contents of zirconia and yttrium are in a predetermined molar ratio, hydrolyzed to obtain a hydrate, then dehydrated, dried, and preliminary calcined at 400 to 1300°C to obtain a preliminary calcined powder. Further, in the case of employing CaO as a stabilizer, CaO is added optionally in the form of a compound such as a carbonate and a hydroxide, and in such an instance, a zirconia raw material powder and a compound raw material powder are wet mixed in advance in such a way as to be a predetermined stabilizer amount, dried, then synthesized at 1000 to 1400°C to obtain a synthesized powder. Note that when CaO, an oxide, is used, the above synthesis step is optionally skipped.

The raw material treatment for preliminary calcined or synthesized powders of mullite-based material, spinel-based material, and zirconia-based material is carried out by suitably adjusting the ball diameter, rotation speed, treating time and the like so that an average particle size of the treated slurry is 1.0 $\mu$m or less. When an average particle size of the slurry is more than 1.0 $\mu$m, the moldability and sinterability are reduced thereby reducing the corrosion resistance and durability of the ceramic sintered compacts, hence not preferable. The lower limit of average particle size is about 0.2 $\mu$m. Further, for the prevention of impurities from mixing in in the form of an abrasion powder from the mill member and the ball during the raw material treatment process, the material with good abrasion resistance according to each ceramic sintered compact is suitably selected and used as the mill member and the ball.

A binder according to each molding method is added to the slurry obtained by the raw material treatment, and the slurry is dried using a spray dryer or the like to produce a powder for molding. Then, using the obtained powder for molding, a molded compact is obtained by a known molding method such as a die press molding, a rubber press molding, a slip casting, or an extrusion molding. The obtained molded compact is calcined according to each material, whereby a sintered compact is obtained. The calcination temperature is suitably selected according to each material in a range from 1500 to 1700°C.

Note that the embossment on the molded compact surface is formed using a die with the embossed surface, and known shot blast, chemical etching and the like can be employed as the die machining method. The size, shape, the number and the like of embossment on the die surface are suitably adjusted considering the calcination shrinkage in such a way as to be within the range suitable for the ceramic sintered compacts of the present invention. Further, the method of forming embossment on the molded compact surface can also employ a method of blast processing the surface of a sintered compact in addition to the method of molding using the above embossed die.

Further, when the zirconia-based sintered compact employs $Y_2O_3$ as a stabilizer, the following method can further be given.

The obtained preliminary calcined zirconia powder is wet milled and dispersed using a known mill such as a pot mill and an attrition mill to obtain a slurry. The average particle size of the powder particles in the slurry is 0.4 to 0.8 $\mu$m, and preferably 0.4 to 0.6 $\mu$m. The average particle size is controlled by the ball size and ball filling amount used when milling and dispersing and treating time.

When an average particle size is less than 0.4 $\mu$m, fine powder particles increase and these fine powder particles further reagglomerate and cause coarse agglomerates thereby resulting in a broad particle size distribution and consequently widening a crystal grain size distribution of the sintered compact. On the other hand, when an average particle size is more than 0.8 $\mu$m, coarse powder particles increase thereby reducing the sinterability and thus increasing a porosity, and as in the case of an average particle size of less than 0.4 $\mu$m, a crystal grain size distribution tends to be wider thereby reducing the corrosion resistance and durability. Note that the average particle size in the present invention is the average value of particle sizes of secondary particles which are agglomerates of primary particles and can be measured using a laser diffraction particle size distribution analyzer.

A known binder (for example, PVA, an acrylic resin and the like) is added in a predetermined amount to the slurry obtained by the above milling and dispersing treatments, and the slurry is dried using a spray dryer to produce a powder for molding. The particle size of the powder for molding is preferably 30 to 70 $\mu$m. When such a size is outside this range, precise embossment intended in the die press molding to be described later is not likely to be formed.

Note that the embossment of a molded compact surface is formed using a die with the embossed surface but the processing method can employ known shot blast, chemical etching and the like. The size, shape, the number and the like of embossment on the die surface are suitably adjusted considering the calcination shrinkage in such a way as to be within the range suitable for the zirconia-based sintered compact of the present invention.

The molded compact can be obtained by press molding using a die at a molding pressure of 300 to 1500 kgf/cm$^2$. The obtained molded compact is calcined in the air at 1560 to 1700°C, and preferably 1560 to 1680°C, to obtain the zirconia-based sintered compact of the present invention. When a calcination temperature is less than 1560°C, an average crystal grain size is less than 8 $\mu$m and an area of the zirconia crystal grain boundaries becomes larger, thereby likely causing the penetration of electronic component ingredients to the zirconia crystal grain boundaries and thus reducing the corrosion resistance. On the other hand, when a calcination temperature is more than 1700°C, an average crystal grain size and the maximum crystal grain size become outside the proper ranges thereby reducing the mechanical strengths and thus likely reducing the thermal shock resistance.

Hereinafter, the present invention will be further specifically described in reference to Examples and Comparative Examples but is in no way limited to these examples.

Examples 1 to 10, Comparative Examples 1 to 33

Ceramic sintered compacts having the embossed surface and consisting of either of the alumina-based sintered compact, magnesia-based sintered compact, mullite-based sintered compact, spinel-based sintered compact, or zirconia-based sintered compact having the composition shown in each column of Examples and Comparative Examples in Tables 1 to 6 were produced.

The method for producing the sintered compacts of each material is as follows. Note that the average particle sizes and the calcination temperatures of each slurry obtained in the raw material treatment are shown in Tables 1 to 6.

Example 1, Comparative Example 5 (alumina-based: alumina 99.7 wt%)

Using an alumina powder having alumina purity of 99.9 wt% and an average particle size of 0.5 $\mu$m (manufactured by Sumitomo Chemical Co., Ltd.), 0.2 wt% of a zirconia powder containing 3 mol% of $Y_2O_3$ (average particle size 0.5 $\mu$m: manufactured by DAIICHI KIGENSO KAGAKU KOGYO CO., LTD.) was added and the mixture was dispersed in water as a solvent using a zirconia pot and 10 mm-diameter balls to thereby obtain a slurry.

Example 5, Comparative Example 1 (alumina-based: alumina 99.5 wt%)

An alumina powder having alumina purity of 99.9 wt% and an average particle size of 0.5 $\mu$m containing 0.05 wt% of magnesia (manufactured by Sumitomo Chemical Co., Ltd.) was used and dispersed in water as a solvent using an alumina (manufactured by NIKKATO CORPORATION: HD, alumina purity: 92 wt%) pot and 10 mm-diameter balls to thereby obtain a slurry.

Example 7, Comparative Example 8 (alumina-based: alumina 96.2 wt%)

Using an alumina powder having alumina purity of 99.7 wt% and an average particle size of 50 $\mu$m (manufactured by Sumitomo Chemical Co., Ltd.), kaolin (manufactured by KCM Corporation) and magnesium hydroxide (manufactured by Sigma-Aldrich Co. LLC) were blended in such a way that a MgO content was 0.7 wt% and a SiO$_2$ content was 3.0 wt%, and the mixture was milled and dispersed in water as a solvent using an alumina (manufactured by NIKKATO CORPORATION: HD, alumina purity: 92 wt%) pot and 10 mm-diameter balls to thereby obtain a slurry.

Example 2, Comparative Example 6 (magnesia-based: MgO 99.4 wt%)

A magnesia powder having magnesia purity of 99.8 wt% and an average particle size of 30 $\mu$m (manufactured by Tateho Chemical Industries Co., Ltd.) was milled and dispersed in alcohol as a solvent using an alumina (manufactured by NIKKATO CORPORATION: HD, alumina purity: 92 wt%) pot and 10 mm-diameter balls to thereby obtain a slurry.

Example 3, Comparative Example 7 (mullite-based: Al$_2$O$_3$ 74.8 wt%, SiO$_2$ 25.1 wt%, Al$_2$O$_3$:SiO$_2$ weight ratio = 74.9:25.1)

Example 6, Comparative Example 3 (mullite-based: Al$_2$O$_3$ 71.0 wt%, SiO$_2$ 27.5 wt%, Al$_2$O$_3$:SiO$_2$ weight ratio = 72.1:27.9)

Using an alumina sol (manufactured by Nissan Chemical Industries, Ltd.) and ethyl silicate (manufactured by COLCOAT CO., LTD.), Al$_2$O$_3$ and SiO$_2$ were blended in such a way as to be predetermined contents, a gel was produced by a sol-gel method, dried, and then synthesized at 1350°C. The obtained powder was milled and dispersed in water as a solvent using an alumina (manufactured by NIKKATO CORPORATION: HD, alumina purity: 92 wt%) pot and 10 mm-diameter balls to thereby obtain a slurry.

Example 4, Comparative Example 2 (spinel-based: Al$_2$O$_3$ 76.1 wt%, MgO 23.3 wt%, Al$_2$O$_3$:SiO$_2$ weight ratio = 76.6:23.4)

Example 8, Comparative Example 4 (spinel-based: Al$_2$O$_3$ 71.5 wt%, MgO 28.3 wt%, Al$_2$O$_3$:SiO$_2$ weight ratio = 71.6:28.4)

Aluminum hydroxide (manufactured by Nippon Light Metal Company, Ltd., average particle size 55 $\mu$m) and magnesium hydroxide (manufactured by Tateho Chemical Industries Co., Ltd., average particle size 60 pm) were blended in such a way as to have predetermined contents of Al$_2$O$_3$ and MgO and synthesized at 1400°C, and the obtained powder was milled and dispersed in water as a solvent using an alumina (manufactured by NIKKATO CORPORATION: HD, alumina purity: 92 wt%) pot and 10 mm-diameter balls to thereby obtain a slurry.

Example 9, Comparative Examples 9, 23, 24, 27, 30, and 31 (zirconia-based: stabilizer Y$_2$O$_3$)

Zirconium oxychloride having zirconia purity of 99.9 wt% (manufactured by DAIICHI KIGENSO KAGAKU KOGYO CO., LTD.: zirconium acid chloride) and yttrium nitrate having purity of 99.9 wt% (manufactured by Kojundo Chemical Laboratory Co., Ltd.) were mixed in such a way that Y$_2$O$_3$ was a predetermined molar concentration, and then water was added to obtain an aqueous solution. This aqueous solution was hydrolyzed while heated to reflux, dehydrated, and dried to obtain hydrated zirconium in which Y$_2$O$_3$ was solid-soluted, and then such a zirconium was preliminary calcined at 1300°C for 1 hour to thereby obtain a zirconia powder. The obtained zirconia powder was wet milled and dispersed in water as a solvent using an attrition mill consisting of abrasion resistant zirconia (manufactured by NIKKATO CORPORATION: YTZ) balls ($\varphi$ 5 mm) and a tank to thereby obtain a slurry.

Example 10, Comparative Examples 25, 26, 28, 29, 32, and 33 (zirconia-based: stabilizer CaO)

A zirconia powder having zirconia purity of 99.9 wt% (manufactured by DAIICHI KIGENSO KAGAKU KOGYO CO., LTD.) and a calcium carbonate powder having purity of 99.9 wt% (manufactured by Sigma-Aldrich Co. LLC, purity 99 wt%) were wet mixed in such a way that CaO was a predetermined molar concentration, dried and then preliminary calcined at 1300°C for 2 hours to thereby obtain a preliminary calcined powder. The obtained preliminary calcined powder was wet milled and dispersed in water as a solvent using an attrition mill consisting of an abrasion resistant zirconia (manufactured by NIKKATO CORPORATION: YTZ) balls ($\varphi$ 5 mm) and a tank to thereby obtain a slurry.

Comparative Example 10 (alumina-based: alumina 94.2 wt%)

Using an alumina powder having alumina purity of 99.7 wt% and an average particle size of 50 $\mu$m (manufactured by Sumitomo Chemical Co., Ltd.), kaolin (manufactured by KCM Corporation) and magnesium hydroxide (manufactured by Sigma-Aldrich Co. LLC) were blended in such a way that a MgO content was 1.5 wt% and a SiO$_2$ content was 4.0 wt%, and the mixture was milled and dispersed in water as a solvent using an alumina (manufactured by NIKKATO CORPORATION: HD, alumina purity: 92 wt%) pot and 10 mm-diameter balls to thereby obtain a slurry.

Comparative Example 11 (alumina-based: alumina 99.5 wt%)

An alumina powder having alumina purity of 99.9 wt% and an average particle size of 0.5 $\mu$m containing 0.05 wt% of magnesia (manufactured by Sumitomo Chemical Co., Ltd.) was used and dispersed in water as a solvent using an alumina (manufactured by NIKKATO CORPORATION: HD, alumina purity: 92 wt%) pot and 10 mm-diameter balls to thereby obtain a slurry.

Comparative Examples 12, 13 (magnesia-based: magnesia 99.4 wt%)

A magnesia powder having magnesia purity of 99.8 wt% and an average particle size of 30 $\mu$m (manufactured by Tateho Chemical Industries Co., Ltd.) was milled and dispersed in alcohol as a solvent using an alumina (manufactured by NIKKATO CORPORATION: HD, alumina purity: 92 wt%) pot and 10 mm-diameter balls to thereby obtain a slurry.

Comparative Example 14 (magnesia-based: magnesia 98.4 wt%)

A magnesia powder having magnesia purity of 99.8 wt% and an average particle size of 30 $\mu$m (manufactured by Tateho Chemical Industries Co., Ltd.) was milled and dispersed in alcohol as a solvent using an alumina (alumina content: 87.0 wt% and SiO$_2$ content: 9.0 wt%) pot and 10 mm-diameter balls to thereby obtain a slurry. Note that the present Comparative Example is an example in which the magnesia content reduced because the abrasion powder was mixed in from the alumina pot and the balls during the raw material treatment process.

Comparative Example 15 (mullite-based: Al$_2$O$_3$ 80.8 wt%, SiO$_2$ 18.7 wt%, Al$_2$O$_3$:SiO$_2$ weight ratio = 81.2:18.8)

Comparative Example 16 (mullite-based: Al$_2$O$_3$ 68.1 wt%, SiO$_2$ 31.7 wt%, Al$_2$O$_3$:SiO$_2$ weight ratio = 68.2:31.8)

Comparative Example 17 (mullite-based: Al$_2$O$_3$ 71.0 wt%, SiO$_2$ 27.5 wt%, Al$_2$O$_3$:SiO$_2$ weight ratio = 72.1:27.9)

An alumina sol (manufactured by Nissan Chemical Industries, Ltd.) and ethyl silicate (manufactured by COLCOAT CO., LTD.) were used and blended in such a way that Al$_2$O$_3$ and SiO$_2$ were predetermined contents, a gel was produced by a sol-gel method, dried, and then synthesized at 1350°C. The obtained powder was milled and dispersed in water as a solvent using an alumina (manufactured by NIKKATO CORPORATION: HD, alumina purity: 92 wt%) pot and 10 mm-diameter balls to thereby obtain a slurry.

Comparative Example 18 (mullite-based: Al$_2$O$_3$ 69.1 wt%, SiO$_2$ 28.0 wt%, Al$_2$O$_3$:SiO$_2$ weight ratio = 71.2:28.8)

An alumina sol (manufactured by Nissan Chemical Industries, Ltd.) and ethyl silicate (manufactured by COLCOAT CO., LTD.) were used and blended in such a way that Al$_2$O$_3$ and SiO$_2$ were predetermined contents, a gel was produced by a sol-gel method, dried, and then synthesized at 1350°C. A calcium carbonate powder (manufactured by Sigma-Aldrich Co. LLC, purity 99 wt%) as an impurity was added to the obtained powder in such a way that the Al$_2$O$_3$ + SiO$_2$ total amount was 97 wt%, and the mixture was mixed, milled and dispersed in water as a solvent using an alumina (manufactured by NIKKATO CORPORATION: HD, alumina purity: 92 wt%) pot and 10 mm-diameter balls to thereby obtain a slurry.

Comparative Example 19 (spinel-based: Al$_2$O$_3$ 76.1 wt%, MgO 23.3 wt%, Al$_2$O$_3$:MgO weight ratio = 76.6:23.4)

Comparative Example 21 (spinel-based: Al$_2$O$_3$ 58.9 wt%, MgO 40.1 wt%, Al$_2$O$_3$:MgO weight ratio = 59.5:40.5)

Comparative Example 22 (spinel-based: Al$_2$O$_3$ 83.8 wt%, MgO 14.5 wt%, Al$_2$O$_3$:MgO weight ratio = 85.3:14.7)

Aluminum hydroxide (manufactured by Nippon Light Metal Company, Ltd., average particle size 55 $\mu$m) and magnesium hydroxide (manufactured by Tateho Chemical Industries Co., Ltd., average particle size 60 pm) were blended in such a way that Al$_2$O$_3$ and MgO were predetermined contents and synthesized at 1400°C, and the obtained powder was milled and dispersed in water as a solvent using an alumina (manufactured by NIKKATO CORPORATION: HD, alumina purity: 92 wt%) pot and 10 mm-diameter balls to thereby obtain a slurry.

Comparative Example 20 (spinel-based: $Al_2O_3$ 73.4 wt%, MgO 25.0 wt%, $Al_2O_3$:MgO weight ratio = 74.6:25.4)

Aluminum hydroxide (manufactured by Nippon Light Metal Company, Ltd., average particle size 55 $\mu$m) and magnesium hydroxide (manufactured by Tateho Chemical Industries Co., Ltd., average particle size 60 pm) were blended in such a way that the $Al_2O_3$:MgO weight ratio was a predetermined content and synthesized at 1400°C, a $SiO_2$ powder (manufactured by Sigma-Aldrich Co. LLC, purity 99 wt%) as an impurity was added to the obtained powder in such a way that the $Al_2O_3$ + MgO total amount was 98 wt%, and the mixture was milled and dispersed in water as a solvent using an alumina (manufactured by NIKKATO CORPORATION: HD, alumina purity: 92 wt%) pot and 10 mm-balls to thereby obtain a slurry.

One wt% of a PVA-based binder (manufactured by JAPAN VAM & POVAL CO., LTD.: JR-05) was added to each slurry excluding magnesia among the above, and 1 wt% of a PVB-based binder (SEKISUI CHEMICAL CO., LTD.: BL-1) was added to the magnesia slurry, and the slurries were dried using a spray dryer to thereby obtain each spray dried powder having an average particle size of 50 $\mu$m. The spray dried powder was die press molded or rubber press molded at a pressure of 1000 kgf/cm$^2$ using a die whose surface was embossed by chemical etching to thereby obtain each molded compact. Then, each molded compact was calcined at the calcination temperatures shown in Tables 1 to 6 to produce ceramic sintered compacts. Note that produced were square shapes of 15 mm $\times$ 15 mm and a thickness of 3 mm having embossment on one surface, and container shapes of 100 mm $\times$ 100 mm, a height of 50 mm, and a thickness of 5 mm having the embossment on the inner surface.

The composition, crystal phase, porosity, average crystal grain size, maximum height of the protruding parts, width of the protruding parts, difference between the maximum height and the minimum height of the protruding parts, and number of the protruding parts present in an area of 1 mm$^2$ of the surface of the ceramic sintered compact in each Example and Comparative Example are as shown in Tables 1 to 6.

Note that the zirconia-based sintered compact of Example 9 which had $Y_2O_3$ as a stabilizer had a minimum crystal grain size of 4.2 $\mu$m, a maximum crystal grain size of 7.3 $\mu$m, an $Al_2O_3$ content of 0.01 wt%, a [$SiO_2$ (wt%)/$Y_2O_3$ (wt%)] $\times$ 100 of 0.15, and an amount of impurities other than $Al_2O_3$ and $SiO_2$ of 0.02 wt%. Comparative Example 9 had a minimum crystal grain size of 3.7 $\mu$m, a maximum crystal grain size of 6.5 $\mu$m, an $Al_2O_3$ content of 0.02 wt%, a [$SiO_2$ (wt%)/$Y_2O_3$ (wt%)] $\times$ 100 of 0.15, and an amount of impurities other than $Al_2O_3$ and $SiO_2$ of 0.02 wt%.

The properties of the above each ceramic sintered compact were evaluated as follows.

(1) Calcination of PbO molded compact

Using a commercial PbO powder (purity: 99 wt% or more, average particle size: 10 $\mu$m or less, manufactured by Sigma-Aldrich Japan), a pellet of $\varphi$ 10 $\times$ 1 mm was produced by die press molding to be a substance to be calcined and placed on each of the square-shaped ceramic sintered compacts (the 15 mm $\times$ 15 mm surface), and further 5 cycles of a test was carried out in which the PbO pellet was held at 800°C for 2 hours while a pressure of 1 kPa was applied thereonto. The presence or absence of the attachment of the ceramic sintered compact after the 5 cycles to the PbO sintered compact, or the deformations of the PbO sintered compact, was evaluated. The results are collectively shown in Tables 1 to 6.

As evident in Tables 1 to 6, it is obvious that the ceramic sintered compacts having the embossed surface satisfying the requirements of the present invention do not only cause the attachment to the substance to be calcined but are also highly effective to prevent the deformations of the substance to be calcined.

(2) Production of synthesized powder

Commercial barium carbonate powder (purity: 99.9 wt% or more, average particle size 1.0 $\mu$m or less, manufactured by KCM Corporation) and titanium oxide powder (purity: 99.9 wt% or more, average particle size 1.0 $\mu$m or less, manufactured by TAYCA CORPORATION) were dispersed and mixed in water as a solvent using a zirconia pot and 1 mm-diameter balls and dried at 100°C to thereby produce a mixed powder. This mixed powder, as a substance to be calcined, was filled in each of the container-shaped ceramic sintered compacts in such a way as to be an amount of an internal volume of 70 vol% and held at 1000°C for 5 hours to carry out 5 cycles of a synthesis test. The presence or absence of the attachment of each ceramic sintered compact after the 5 cycles to the synthesized powder was evaluated, and the results are collectively shown in Tables 1 to 6.

As evident in Tables 1 to 6, it is obvious that the ceramic sintered compacts having the embossed surface satisfying the requirements of the present invention do not cause the attachment to the synthesized powder.

(3) Durability test

A durability test in which 30 cycles of the above (1) and (2) were carried out was carried out. The presence or absence of deformations and cracks of each ceramic sintered compact after the 30 cycles was evaluated, and the results thereof are collectively shown in Tables 1 to 6. Note that the sintered compacts free from deformations and cracks after the 30 cycles are represented by ∘, and the sintered compacts with the occurrence of deformations and cracks up to the 30 cycles are represented by ✕.

As evident in Tables 1 to 6, it is obvious that the square- and container-shaped ceramic sintered compacts satisfying the requirements of claims 1 to 8 of the present invention are free from deformations and cracks with good durability.

[Table 1]

| | Sample No. | Material | Main ingredient | Crystal phase | Slurry average particle size ($\mu$m) | Calcination temperature (%) | Porosity (%) | Average crystal grain size ($\mu$m) |
|---|---|---|---|---|---|---|---|---|
| Example | 1 | Alumina | $Al_2O_3$:99.7 wt% | $\alpha$-$Al_2O_3$ | 0.5 | 1700 | 0.1 | 30 |
| | 2 | Magnesia | MgO:99.4 wt% | MgO | 0.6 | 1680 | 0.3 | 40 |
| | 3 | Mullite | $Al_2O_3$+$SiO_2$:99.9 wt% , $Al_2O_3$:$SiO_2$=74.9:25.1 | Mullite crystal phase:100 vol% | 0.7 | 1690 | 0.2 | 10 |
| | 4 | Spinel | $Al_2O_3$ + MgO:99.4 wt% , $Al_2O_3$:MgO=76.6:23.4 | Spinel crystal phase:99 vol% | 0.6 | 1640 | 0.3 | 11 |
| | 5 | Alumina | $Al_2O_3$:99.5 wt% | $\alpha$-$Al_2O_3$ | 0.5 | 1600 | 0.2 | 10 |
| | 6 | Mullite | $Al_2O_3$+$SiO_2$:98.5 wt% , $Al_2O_3$:$SiO_2$=72.1:27.9 | Mullite crystal phase:100 vol% | 0.7 | 1650 | 0.1 | 3 |
| | 7 | Alumina | $Al_2O_3$:96.2 wt% | $\alpha$-$Al_2O_3$ | 1.0 | 1530 | 0.3 | 5 |
| | 8 | Spinel | $Al_2O_3$ + MgO:99.8 wt% , $Al_2O_3$:MgO=71.6:28.4 | Spinel crystal phase:96 vol% | 0.6 | 1610 | 0.4 | 3 |
| | 9 | Zirconia | $Y_2O_3$:8 mol% , $ZrO_2$+$Y_2O_3$:99.9 wt% | Cubic zirconia:99 vol% | 0.4 | 1570 | 0.3 | 7 |
| | 10 | Zirconia | CaO:15 mol% , $ZrO_2$+CaO:99.8 wt% | Cubic zirconia:100 vol% | 0.5 | 1590 | 0.2 | 35 |

[Table 2]

| | Sample No. | Maximum height of protruding part ($\mu$m) | Width of protruding part ($\mu$m) | Difference between maximum height and minimum height of protruding part ($\mu$m) | Number of protruding parts in 1 mm² area (Number) | (1) Calcination of PbO molded compact | (2) Production of synthesized powder | (3) Durability test | |
|---|---|---|---|---|---|---|---|---|---|
| | | | | | | Presence or absence of attachment of ceramic sintered compact to substance to be calcined or deformations of substance to be calcined | Presence or absence of attachment of ceramic sintered compact to synthesized powder | Square | Container |
| Example | 1 | 28 | 105 | 12 | 41 | Absent | Absent | ○ | ○ |
| | 2 | 16 | 46 | 7 | 192 | Absent | Absent | ○ | ○ |
| | 3 | 21 | 67 | 13 | 77 | Absent | Absent | ○ | ○ |
| | 4 | 26 | 98 | 14 | 51 | Absent | Absent | ○ | ○ |
| | 5 | 12 | 55 | 11 | 125 | Absent | Absent | ○ | ○ |
| | 6 | 19 | 112 | 8 | 35 | Absent | Absent | ○ | ○ |
| | 7 | 24 | 77 | 15 | 86 | Absent | Absent | ○ | ○ |
| | 8 | 22 | 81 | 13 | 104 | Absent | Absent | ○ | ○ |
| | 9 | 25 | 102 | 11 | 47 | Absent | Absent | ○ | ○ |
| | 10 | 18 | 115 | 10 | 32 | Absent | Absent | ○ | ○ |

[Table 3]

| | Sample No. | Material | Main ingredient | Crystal phase | Slurry average particle size (μm) | Calcination temperature (%) | Porosity (%) | Average crystal grain size (μm) |
|---|---|---|---|---|---|---|---|---|
| Comparative Example | 1 | Alumina | $Al_2O_3$:99.5 wt% | $\alpha$-$Al_2O_3$ | 0.5 | 1720 | 0.1 | 32 |
| | 2 | Spinel | $Al_2O_3$ + MgO:99.4 wt% , $Al_2O_3$:MgO=76.6:23.4 | Spinel crystal phase:99 vol% | 0.6 | 1730 | 0.2 | 34 |
| | 3 | Mullite | $Al_2O_3$ + $SiO_2$:98.5 wt% , $Al_2O_3$:$SiO_2$=72.1:27.9 | Mullite crystal phase: 100 vol% | 0.7 | 1490 | 0.1 | 1 |
| | 4 | Spinel | $Al_2O_3$+MgO:99.8 wt% , $Al_2O_3$:MgO=71.6:28.4 | Spinel crystal phase:95 vol% | 0.6 | 1420 | 0.1 | 1 |
| | 5 | Alumina | $Al_2O_3$:99.7 wt% | $\alpha$-$Al_2O_3$ | 0.5 | 1470 | 0.5 | 4 |
| | 6 | Magnesia | MgO:99.4 wt% | MgO | 0.6 | 1750 | 0.1 | 45 |
| | 7 | Mullite | $Al_2O_3$+$SiO_2$:99.9 wt% , $Al_2O_3$:$SiO_2$=74.9:25.1 | Mullite crystal phase: 100 vol% | 0.7 | 1760 | 0.1 | 17 |
| | 8 | Alumina | $Al_2O_3$:96.2 wt% | $\alpha$-$Al_2O_3$ | 1.8 | 1450 | 0.1 | 3 |
| | 9 | Zirconia | $Y_2O_3$:5 mol% , $ZrO_2$+$Y_2O_3$: 99.9 wt% | Cubic zirconia:94 vol% | 0.4 | 1560 | 0.2 | 5 |
| | 10 | Alumina | $Al_2O_3$:94.2 wt% | $\alpha$-$Al_2O_3$ | 0.3 | 1610 | 0.2 | 10 |
| | 11 | Alumina | $Al_2O_3$:99.5 wt% | $\alpha$-$Al_2O_3$ | 1.2 | 1520 | 1.2 | 6 |
| | 12 | Magnesia | MgO:99.4 wt% | MgO | 1.5 | 1530 | 1.5 | 21 |
| | 13 | Magnesia | MgO:99.4 wt% | MgO | 0.4 | 1490 | 0.4 | 18 |
| | 14 | Magnesia | MgO:98.4 wt% | MgO | 0.5 | 1630 | 0.2 | 36 |
| | 15 | Mullite | $Al_2O_3$+$SiO_2$:99.5 wt% , $Al_2O_3$:$SiO_2$=81.2:18.8 | Mullite crystal phase:93 vol% | 0.6 | 1670 | 0.2 | 13 |
| | 16 | Mullite | $Al_2O_3$+$SiO_2$:99.8 wt% , $Al_2O_3$:$SiO_2$=68.2:31.8 | Mullite crystal phase:99 vol% | 0.7 | 1600 | 0.5 | 8 |
| | 17 | Mullite | $Al_2O_3$+$SiO_2$:98.5 wt% , $Al_2O_3$:$SiO_2$=72.1:27.9 | Mullite crystal phase: 100 vol% | 1.3 | 1630 | 1.3 | 3 |

[Table 4]

| | Sample No. | Maximum height of protruding part (μm) | Width of protruding part (μm) | Difference between maximum height and minimum height of protruding part (μm) | Number of protruding parts in 1 mm² area (Number) | (1) Calcination of PbO molded compact | (2) Production of synthesized powder | (3) Durability test | |
|---|---|---|---|---|---|---|---|---|---|
| | | | | | | Presence or absence of attachment of ceramic sintered compact to substance to be calcined or deformations of substance to be calcined | Presence or absence of attachment of ceramic sintered compact to synthesized powder | Square | Container |
| Comparative Example | 1 | 22 | 93 | 17 | 59 | Present | Present | × | × |
| | 2 | 16 | 117 | 11 | 28 | Present | Present | × | × |
| | 3 | 20 | 126 | 21 | 21 | Present | Present | × | × |
| | 4 | 19 | 47 | 12 | 233 | Present | Present | × | × |
| | 5 | 33 | 102 | 18 | 57 | Present | Present | × | × |
| | 6 | 13 | 129 | 9 | 33 | Present | Present | × | × |
| | 7 | 35 | 79 | 14 | 95 | Present | Present | × | × |
| | 8 | 24 | 131 | 14 | 25 | Present | Present | × | × |
| | 9 | 12 | 131 | 5 | 29 | Present | Present | × | × |
| | 10 | 19 | 85 | 10 | 25 | Present | Present | × | × |
| | 11 | 29 | 104 | 23 | 35 | Present | Present | × | × |
| | 12 | 12 | 52 | 6 | 210 | Present | Present | × | × |
| | 13 | 20 | 65 | 19 | 72 | Present | Present | × | × |
| | 14 | 35 | 110 | 13 | 56 | Present | Present | × | × |
| | 15 | 23 | 141 | 19 | 125 | Present | Present | × | × |
| | 16 | 29 | 103 | 21 | 48 | Present | Present | × | × |
| | 17 | 15 | 49 | 5 | 245 | Present | Present | × | × |

EP 3 936 489 A1

[Table 5]

| | Sample No. | Material | Main ingredient | Crystal phase | Slurry average particle size ($\mu$m) | Calcination temperature (%) | Porosity (%) | Average crystal grain size ($\mu$m) |
|---|---|---|---|---|---|---|---|---|
| | | | | | | | | |

| | Sample No. | Material | Main ingredient | Crystal phase | Slurry average particle size (μm) | Calcination temperature (%) | Porosity (%) | Average crystal grain size (μm) |
|---|---|---|---|---|---|---|---|---|
| Comparative Example | 18 | Mullite | $Al_2O_3$ + $SiO_2$:97.1 wt% , $Al_2O_3$:$SiO_2$=71.2:28.8 | Mullite crystal phase:98 vol% | 0.5 | 1690 | 0.1 | 13 |
| | 19 | Spinel | $Al_2O_3$ + MgO:99.4 $Al_2O_3$:MgO=76.6:23.4 wt% , | Spinel crystal phase:99 vol% | 1.6 | 1650 | 1.7 | 12 |
| | 20 | Spinel | $Al_2O_3$ + MgO:98.4 $Al_2O_3$:MgO=74.6:25.4 wt% , | Spinel crystal phase:99 vol% | 0.7 | 1640 | 0.4 | 11 |
| | 21 | Spinel | $Al_2O_3$ + MgO:990 $Al_2O_3$/MgO=59.5:40.5 wt% , | Spinel crystal phase:89 vol% | 0.5 | 1590 | 0.5 | 5 |
| | 22 | Spinel | $Al_2O_3$ + MgO:98.3 $Al_2O_3$/MgO=85.3:14.7 wt% , | Spinel crystal phase:88 vol% | 0.4 | 1630 | 0.3 | 10 |
| | 23 | Zirconia | $Y_2O_3$:8 mol% , $ZrO_2$+$Y_2O_3$:99.9 wt% | Cubic zirconia:99 vol% | 0.4 | 1470 | 0.5 | 3 |
| | 24 | Zirconia | $Y_2O_3$:8 mol% , $ZrO_2$+$Y_2O_3$:99.9 wt% | Cubic zirconia: 100 vol% | 0.4 | 1760 | 0.1 | 42 |
| | 25 | Zirconia | CaO:15 mol% , $ZrO_2$+CaO:99.8 wt% | Cubic zirconia: 100 vol% | 0.5 | 1750 | 0.1 | 43 |
| | 26 | Zirconia | CaO:15 mol% , $ZrO_2$+CaO:99.8 wt% | Cubic zirconia:99 vol% | 0.5 | 1450 | 0.4 | 4 |
| | 27 | Zirconia | $Y_2O_3$:16 mol% , $ZrO_2$+$Y_2O_3$:98.3 wt% | Cubic zirconia: 100 vol% | 0.5 | 1680 | 0.1 | 7 |
| | 28 | Zirconia | CaO:8 mol% , $ZrO_2$+CaO:98.4 wt% | Cubic zirconia: 100 vol% | 0.8 | 1590 | 0.2 | 24 |
| | 29 | Zirconia | CaO:15 mol% , $ZrO_2$+CaO:99.9 wt% | Cubic zirconia: 100 vol% | 1.5 | 1600 | 1.3 | 32 |
| | 30 | Zirconia | $Y_2O_3$:8 mol% , $ZrO_2$+$Y_2O_3$:99.9 wt% | Cubic zirconia: 100 vol% | 1.2 | 1630 | 0.9 | 7 |
| | 31 | Zirconia | $Y_2O_3$:21 mol% , $ZrO_2$+$Y_2O_3$:98.1 wt% | Cubic zirconia: 100 vol% | 0.5 | 1660 | 0.1 | 11 |
| | 32 | Zirconia | CaO:4 mol% , $ZrO_2$+CaO:98.9 wt% | Cubic zirconia:93 vol% | 0.9 | 1590 | 0.3 | 21 |
| | 33 | Zirconia | CaO:24 mol% , $ZrO_2$+CaO:99.4 wt% | Cubic zirconia: 100 vol% | 0.6 | 1580 | 0.4 | 19 |

EP 3 936 489 A1

[Table 6]

| | Sampl e No. | Maximum height of protrud ing part ($\mu$m) | Width of protrud ing part ($\mu$m) | Difference between maximum height and minimum height of protruding part ($\mu$m) | Number of protruding parts in 1 mm$^2$ area (Number) | (1) Calcination of PbO molded compact — Presence or absence of attachment of ceramic sintered compact to substance to be calcined or deformations of substance to be calcined | (2) Production of synthesized powder — Presence or absence of attachment of ceramic sintered compact to synthesized powder | (3) Durability test — Square | (3) Durability test — Container |
|---|---|---|---|---|---|---|---|---|---|
| Comparative Example | 18 | 21 | 130 | 8 | 41 | Present | Present | × | × |
| | 19 | 16 | 128 | 9 | 77 | Present | Present | × | × |
| | 20 | 29 | 56 | 17 | 195 | Present | Present | × | × |
| | 21 | 38 | 87 | 14 | 139 | Present | Present | × | × |
| | 22 | 45 | 90 | 15 | 81 | Present | Present | × | × |
| | 23 | 30 | 123 | 25 | 35 | Present | Present | × | × |
| | 24 | 41 | 76 | 15 | 102 | Present | Present | × | × |
| | 25 | 28 | 75 | 20 | 80 | Present | Present | × | × |
| | 26 | 17 | 80 | 5 | 219 | Present | Present | × | × |
| | 27 | 38 | 96 | 17 | 69 | Present | Present | × | × |
| | 28 | 28 | 117 | 6 | 24 | Present | Present | × | × |
| | 29 | 14 | 152 | 5 | 39 | Present | Present | × | × |
| | 30 | 24 | 57 | 6 | 212 | Present | Present | × | × |
| | 31 | 19 | 73 | 7 | 25 | Present | Present | × | × |
| | 32 | 40 | 68 | 15 | 85 | Present | Present | × | × |
| | 33 | 30 | 55 | 25 | 195 | Present | Present | × | × |

**Industrial Applicability**

The ceramic sintered compacts of the present invention can prevent deformations and cracks of calcined electronic components when manufacturing downsized and higher performed electronic components and the like by calcination, and, when used as a container for synthesizing a high function powder, can also prevent the reaction and attachment of the container to the synthesized powder, and thus can be used preferably as heat treatment members such as a heat treatment setter, a container for powder synthesis, a container for growing single crystals, a heat treatment container, a furnace core tube for a tubular furnace, and a tube for rotary kiln.

**Claims**

1. A ceramic sintered compact having embossment satisfying the following requirements (a) to (d) on the surface:

   (a) a maximum height of protruding parts of the embossment: Ry is 30 $\mu$m or less;
   (b) a width of protruding parts of the embossment is 120 $\mu$m or less;
   (c) a difference between a maximum height and a minimum height of protruding parts of the embossment is 15 $\mu$m or less; and
   (d) the number of protruding parts of the embossment is 30 to 200 in an area of 1 $mm^2$ of the surface.

2. The ceramic sintered compact according to claim 1, being an alumina-based sintered compact, a magnesia-based sintered compact, a mullite-based sintered compact, a spinel-based sintered compact, or a zirconia-based sintered compact.

3. The ceramic sintered compact according to claim 1 or 2, wherein a porosity is 0.5% or less.

4. The ceramic sintered compact according to claim 3, being an alumina-based sintered compact having an $Al_2O_3$ content of 95.0 wt% or more and an average crystal grain size of 5 to 30 $\mu$m.

5. The ceramic sintered compact according to claim 3, being a magnesia-based sintered compact having a MgO content of 99.0 wt% or more and an average crystal grain size of 20 to 40 $\mu$m.

6. The ceramic sintered compact according to claim 3, being a mullite-based sintered compact having a total content of $Al_2O_3$ and $SiO_2$ of 98.0 wt% or more, an $Al_2O_3/SiO_2$ weight ratio of 70/30 to 76/24, an average crystal grain size of 2 to 15 $\mu$m, and a mullite crystal phase amount of 96 vol% or more.

7. The ceramic sintered compact according to claim 3, being a spinel-based sintered compact having a total content of $Al_2O_3$ and MgO of 99.0 wt% or more, an $Al_2O_3/MgO$ weight ratio of 70/30 to 80/20, an average crystal grain size of 3 to 30 $\mu$m, and a spinel crystal phase amount of 94 vol% or more.

8. The ceramic sintered compact according to claim 3, being a zirconia-based sintered compact containing at least one substance selected from $Y_2O_3$ and CaO as a stabilizer in a range from 8 to 20 mol% based on $ZrO_2$ and having a total content of $ZrO_2$ and the stabilizer of 99.0 wt% or more, an average crystal grain size of 5 to 40 $\mu$m, and 98 vol% or more of the crystal phase being cubic zirconia.

9. A method for manufacturing the ceramic sintered compact according to any one of claims 1 to 8, comprising:

   a step of blending ceramic raw materials,
   a step of performing wet mixing, milling, and dispersing so that an average particle size of a slurry is 1.0 $\mu$m or less,
   a step of drying the slurry to obtain a powder for molding and obtaining a molded compact having embossment on the surface using the powder for molding, and
   a step of sintering the molded compact at a temperature ranging from 1500 to 1700°C to obtain a sintered compact.

10. A heat treatment member consisting of the ceramic sintered compact according to any one of claims 1 to 8.

[Fig. 1]

Width of a protruding part

[Fig. 2]

Minimum height of
protruding parts

Maximum height of
protruding parts

Profile
curve

| INTERNATIONAL SEARCH REPORT | International application No. |
|---|---|
| | PCT/JP2020/009752 |

**A. CLASSIFICATION OF SUBJECT MATTER**
C04B 35/486(2006.01)i; C04B 35/043(2006.01)i; C04B 35/101(2006.01)i; C04B 35/185(2006.01)i; C04B 35/443(2006.01)i; C04B 35/64(2006.01)i; F27D 3/12(2006.01)i
FI:　　C04B35/486; C04B35/043; C04B35/101; C04B35/185; C04B35/443; C04B35/64; F27D3/12 S

According to International Patent Classification (IPC) or to both national classification and IPC

**B. FIELDS SEARCHED**

Minimum documentation searched (classification system followed by classification symbols)
C04B35/486; C04B35/043; C04B35/101; C04B35/185; C04B35/443; C04B35/64; F27D3/12

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-300782 A (TOKYO YOGYO CO., LTD.) 21.10.2003 (2003-10-21) entire text, all drawings | 1-10 |
| A | JP 2005-82429 A (NIKKATO KK) 31.03.2005 (2005-03-31) entire text | 1-10 |
| A | JP 2006-256924 A (NIKKATO KK) 28.09.2006 (2006-09-28) entire text | 1-10 |
| A | JP 9-208330 A (FUJI DENKI KAGAKU CO., LTD.) 12.08.1997 (1997-08-12) entire text, all drawings | 1-10 |
| A | JP 2005-8483 A (SHIN-ETSU CHEMICAL CO., LTD.) 13.01.2005 (2005-01-13) entire text, all drawings | 1-10 |
| A | JP 9-278517 A (TOSOH CORP.) 28.10.1997 (1997-10-28) entire text, all drawings | 1-10 |

☒ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 May 2020 (07.05.2020) | 19 May 2020 (19.05.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/009752

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-225186 A (NATIONAL INSTITUTE OF ADVANCED INDUSTRIAL SCIENCE AND TECHNOLOGY) 31.08.2006 (2006-08-31) entire text, all drawings | 1-10 |
| A | JP 2013-178053 A (NIKKATO KK) 09.09.2013 (2013-09-09) entire text | 1-10 |
| A | JP 2008-106299 A (MITSUBISHI MATERIALS CORP.) 08.05.2008 (2008-05-08) entire text, all drawings | 1-10 |
| A | JP 2008-252089 A (TODA KOGYO CORP.) 16.10.2008 (2008-10-16) entire text, all drawings | 1-10 |
| A | WO 2004/026791 A1 (MITSUI MINING & SMELTING CO., LTD.) 01.04.2004 (2004-04-01) entire text, all drawings | 1-10 |

Form PCT/ISA/210 (continuation of second sheet) (January 2015)

**INTERNATIONAL SEARCH REPORT**
Information on patent family members

| International application No. |
| --- |
| PCT/JP2020/009752 |

| Patent Documents referred in the Report | Publication Date | Patent Family | Publication Date |
| --- | --- | --- | --- |
| JP 2003-300782 A | 21 Oct. 2003 | (Family: none) | |
| JP 2005-82429 A | 31 Mar. 2005 | (Family: none) | |
| JP 2006-256924 A | 28 Sep. 2006 | (Family: none) | |
| JP 9-208330 A | 12 Aug. 1997 | (Family: none) | |
| JP 2005-8483 A | 13 Jan. 2005 | US 2004/0258842 A1 whole document, whole drawing | |
| JP 9-278517 A | 28 Oct. 1997 | (Family: none) | |
| JP 2006-225186 A | 31 Aug. 2006 | (Family: none) | |
| JP 2013-178053 A | 09 Sep. 2013 | (Family: none) | |
| JP 2008-106299 A | 08 May 2008 | (Family: none) | |
| JP 2008-252089 A | 16 Oct. 2008 | US 2008/0224937 A1 whole document, whole drawing EP 1968079 A2 KR 10-2008-0082466 A CN 101262085 A TW 200901239 A | |
| WO 2004/026791 A1 | 01 Apr. 2004 | US 2005/0257740 A1 whole document, whole drawing EP 1547991 A1 KR 10-2005-0073455 A CN 1701051 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001114555 A
- JP 1188459 A
- JP 62003069 A
- JP 2000302538 A
- JP 2004315293 A
- JP 2013178053 A
- JP 2003300782 A